(19) Europäisches Patentamt / European Patent Office / Office européen des brevets

(11) **EP 3 703 249 B1**

(12) **EUROPEAN PATENT SPECIFICATION**

(45) Date of publication and mention
of the grant of the patent:
**20.07.2022 Bulletin 2022/29**

(21) Application number: **18871235.0**

(22) Date of filing: **27.06.2018**

(51) International Patent Classification (IPC):
*H02P 27/06* (2006.01)   *H02M 7/48* (2007.01)
*H02P 23/20* (2016.01)   *H02H 7/122* (2006.01)

(52) Cooperative Patent Classification (CPC):
**H02P 23/20; H02M 7/48; H02P 27/06**

(86) International application number:
**PCT/JP2018/024350**

(87) International publication number:
**WO 2019/082441 (02.05.2019 Gazette 2019/18)**

(54) **POWER CONVERSION DEVICE AND CONTROLLING METHOD THEREFOR**

STROMUMWANDLUNGSVORRICHTUNG UND STEUERUNGSVERFAHREN DAFÜR

DISPOSITIF DE CONVERSION DE PUISSANCE ET SON PROCÉDÉ DE COMMANDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.10.2017 JP 2017205000**

(43) Date of publication of application:
**02.09.2020 Bulletin 2020/36**

(73) Proprietor: **Hitachi Industrial Equipment Systems
Co., Ltd.
Tokyo 101-0022 (JP)**

(72) Inventors:
• **TOBARI, Kazuaki**
  **Tokyo 100-8280 (JP)**
• **IWAJI, Yoshitaka**
  **Tokyo 100-8280 (JP)**
• **HADINATA, Agnes**
  **Tokyo 100-8280 (JP)**
• **NAKAMURA, Atsuhiko**
  **Tokyo 101-0022 (JP)**
• **ONUMA, Yusaku**
  **Tokyo 101-0022 (JP)**
• **SUGIMOTO, Takuya**
  **Tokyo 101-0022 (JP)**

(74) Representative: **Mewburn Ellis LLP
Aurora Building
Counterslip
Bristol BS1 6BX (GB)**

(56) References cited:
EP-A1- 2 963 801      CN-A- 104 467 296
JP-A- H0 739 183      JP-A- 2002 325 492
JP-A- 2012 175 742    JP-A- 2013 093 957
JP-A- 2016 163 501    US-A- 5 949 663
US-B1- 6 260 004

**Description**

Technical Field

The present invention is directed to a power conversion device and to a control method for a power conversion device. In general, the present invention relates to a control method for a stable operation of a motor without causing overcurrent and overvoltage of the power conversion device in an actual operation of a V/f control and a vector control in which a ratio of an output voltage V and an output frequency f of a power conversion device which drives a motor, or in an automatic tuning in which an inertia moment value of a machine attached to the motor is automatically measured before the actual operation.

Background Art

As a background art of this technical field, there is disclosed JP 2002-34289 A. In JP 2002-34289 A, when an output current of the power conversion device exceeds the current limit value, a voltage command value is corrected on the basis of a voltage limit value in proportion to an exceeding amount, and an acceleration of a frequency command is corrected at the same time so as not to cause a power converter to reach overcurrent.
JP 2012 175742 discloses an electric power conversion system that automatically sets an acceleration time or deceleration time such that an electric power conversion function does not stop through overcurrent protection or overvoltage protection, and stores its setting value.

Summary of Invention

Technical Problem

However, in the technique of JP 2002-34289 A, the regenerative energy returns to the power conversion device at the time of the regeneration operation where the frequency command decelerates. Therefore, a DC voltage is increased. As a result, it is not considered that the power converter gets into overvoltage.
In an acceleration (power running) operation where the frequency of the motor and the polarity of torque are same and a deceleration (regeneration) operation where the frequency of the motor and the polarity of torque are different, there is a need to prevent that the power converter falls into overcurrent and overvoltage.

Solution to Problem

The invention is defined in the independent claims.

Advantageous Effects of Invention

According to the invention, there is provided a power conversion device and a control method thereof which can realize the acceleration/deceleration operation such that a power conversion device does not get into overcurrent and overvoltage by automatically adjusting a frequency command even in a case where an inertia moment value of the machine attached to a motor is large.

Brief Description of Drawings

[FIG. 1] FIG. 1 is a diagram illustrating a configuration of the power conversion device in a first embodiment.
[FIG. 2] FIG. 2 is a diagram illustrating acceleration operation characteristics in a case where the related art is used.
[FIG. 3] FIG. 3 is a diagram illustrating a configuration of a frequency correction calculation unit in the first embodiment.
[FIG. 4] FIG. 4 is a diagram illustrating the acceleration operation characteristics in the first embodiment.
[FIG. 5] FIG. 5 is a diagram illustrating a deceleration operation characteristic in the first embodiment.
[FIG. 6] FIG. 6 is a diagram illustrating other acceleration operation characteristics in the first embodiment.
[FIG. 7] FIG. 7 is a diagram illustrating a configuration for checking presentation in the first embodiment.
[FIG. 8] FIG. 8 is a diagram illustrating a configuration of the power conversion device in a second embodiment.
[FIG. 9] FIG. 9 is a diagram illustrating a configuration of the power conversion device in a third embodiment.
[FIG. 10] FIG. 10 is a diagram illustrating a configuration of the power conversion device in a fourth embodiment.
[FIG. 11] FIG. 11 is a diagram illustrating a configuration of the power conversion device in a fifth embodiment.

Description of Embodiments

Hereinafter, embodiments of the invention will be described using the drawings.

First Embodiment

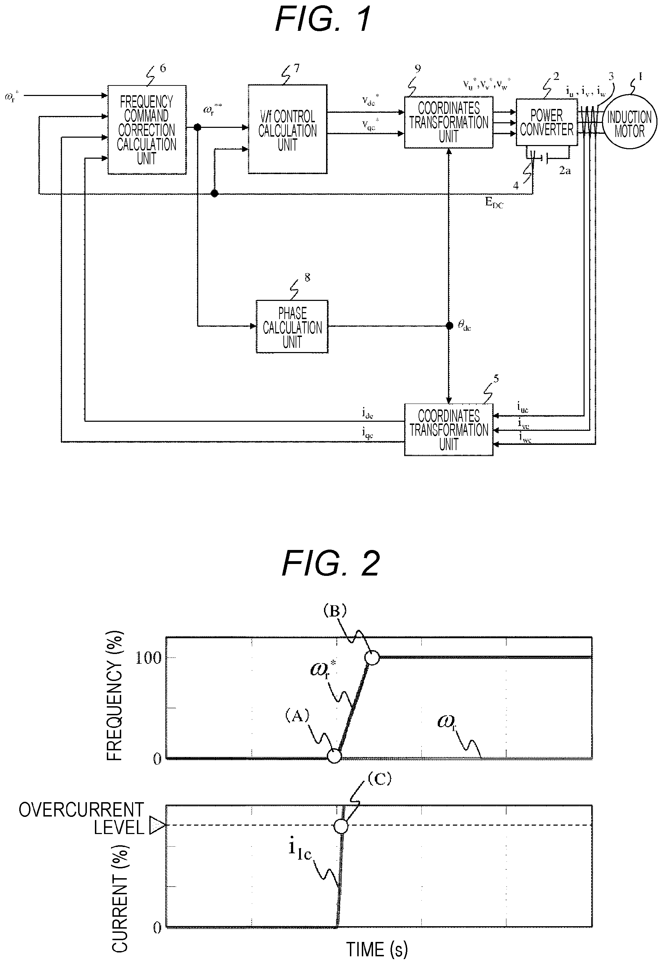

FIG. 1 is a diagram illustrating a configuration of the power conversion device in this embodiment. In FIG. 1, an induction motor 1 generates a magnetic flux generated by the current of a magnetic flux axis component (d axis), and torque generated by the current of a torque axis component (q axis) perpendicular to the magnetic flux axis. A power converter 2 outputs the voltage values in proportion to voltage command values $v_u{}^*$, $v_u{}^*$, and $v_u{}^*$ of the three-phase AC current, and varies an output voltage and an output frequency of the induction motor 1. A DC power source 2a supplies a DC voltage to the power converter 2.

A current detector 3 outputs detection values $i_{uc}$, $i_{vc}$, and $i_{wc}$ of the three-phase AC currents $i_u$, $i_v$, and $i_w$ of the induction motor 1, or may detect two phases (for example, u-phase and w-phase) out of three phases of the induction motor 1 to obtain the v-phase current as $i_v = -(i_u + i_w)$ from the AC condition $(i_u + i_v + i_w = 0)$ .

A DC voltage detector 4 outputs the DC voltage $E_{DC}$ of the power converter 2. A coordinates transformation unit 5 outputs the current detection values $i_{dc}$ and $i_{qc}$ of d and q axes from the detection values $i_{uc}$, $i_{vc}$, and $i_{wc}$ of the three-phase AC currents and a phase calculation value $\theta_{dc}$. A frequency command correction calculation unit 6 outputs new frequency command $\omega_r{}^{**}$ calculated on the basis of a frequency command $\omega_r{}^*$, the DC voltage $E_{DC}$ of the power converter, and the current detection values $i_{dc}$ and $i_{qc}$ of $d_c$ axis and $q_c$ axis. A V/f control calculation unit 7 outputs a voltage command value $v_{qc}{}^*$ of q axis in proportion to the new frequency command $\omega_r{}^{**}$ and $v_{dq}{}^*$ which is zero.

A phase calculation unit 8 integrates the new frequency command $\omega_r{}^{**}$ to output the phase calculation value $\theta_{dc}$. A coordinates transformation unit 9 outputs the voltage command values $v_u{}^*$, $v_v{}^*$, and $v_w{}^*$ of the three-phase AC current from voltage command values $v_{dq}{}^*$ and $v_{qc}{}^*$ of $d_c$ axis and $q_c$ axis and the phase calculation value $\theta_{dc}$.

First, the description will be given about a basic operation of a V/f control system in a case where the frequency command correction calculation unit 6 of this embodiment is not used.

The V/f control calculation unit 7 outputs the voltage command value $v_{qc}{}^*$ of $q_c$ axis and the voltage command value $v_{dq}{}^*$ of $d_c$ axis which is zero according to Expression (1) using the frequency command $\omega_r{}^*$ and the DC voltage $E_{DC}$.
[Math. 1]

$$\left[ \begin{array}{l} V_{dc}{}^* = 0 \\ \\ V_{qc}{}^* = \dfrac{2}{\sqrt{3}} \cdot \dfrac{E_{DC}/2}{\omega_{r\_max}} \end{array} \right. \quad \cdots \ (1)$$

Herein, $\omega_{r\_max}$ is a maximum frequency.

In Expression (1), a setting value $E_{DC}{}^*$ of the DC voltage may be used instead of the DC voltage $E_{DC}$.

In the phase calculation unit 8, the phase calculation value $\theta_{dc}$ of the magnetic flux axis of the induction motor 1 is calculated according to Expression (2).
[Math. 2]

$$\theta_{dc} = \frac{1}{s} \cdot \omega_r{}^{**} \quad \cdots \ (2)$$

Next, the description will be given about a control characteristic when the frequency command correction calculation unit 6 is not used in a case where the inertia moment value of a machine attached to the induction motor 1 is large. The upper and lower drawings of FIG. 2 illustrate actual frequency and current characteristics when the induction motor 1 accelerates (power running) operation. In the upper drawing of FIG. 2, the frequency command $\omega_r{}^*$ of a ramp shape is applied from 0 to 100% from Point (A) to Point (B) while a frequency $\omega_r$ of the induction motor 1 is stopped. An output current $i_{1c}$ of the power converter 2 illustrated in the lower drawing of FIG. 2 reaches an overcurrent level determined from current withstand (maximum current) of a semiconductor switching element of the power converter 2 at Point (C) and, at this time point, is not possible to drive the induction motor 1.

In this way, in a case where the inertia moment value of the machine attached to the induction motor 1 is large, the power conversion device falls to an overcurrent and easily becomes inoperable.

Therefore, the problem can be improved if the frequency command correction calculation unit 6 according to this embodiment is employed. Hereinafter, this embodiment will be described.

Hereinbelow, the description will be given about control characteristics in a case where the frequency command correction calculation unit 6 according to this embodiment is employed.

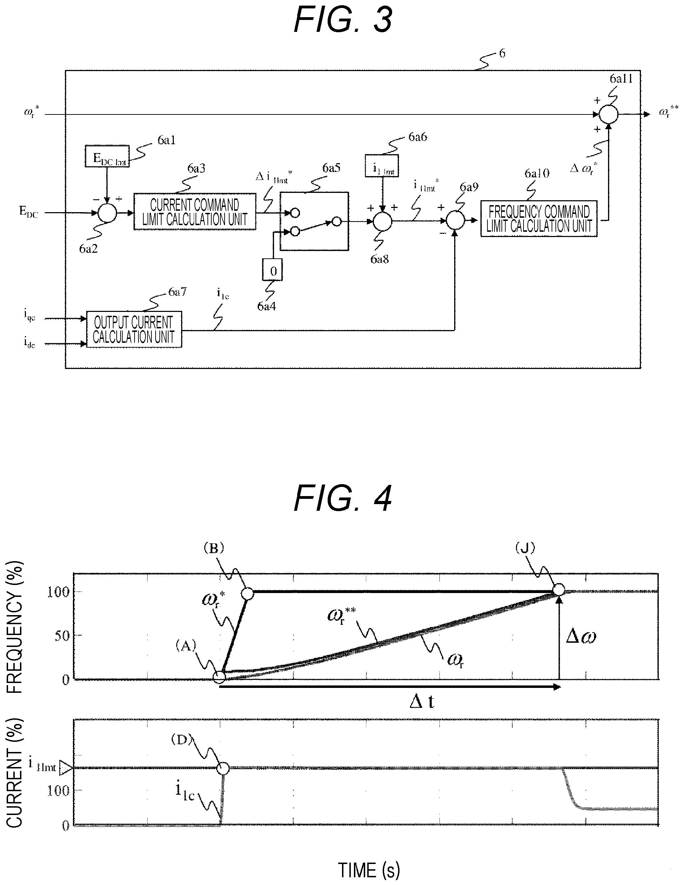

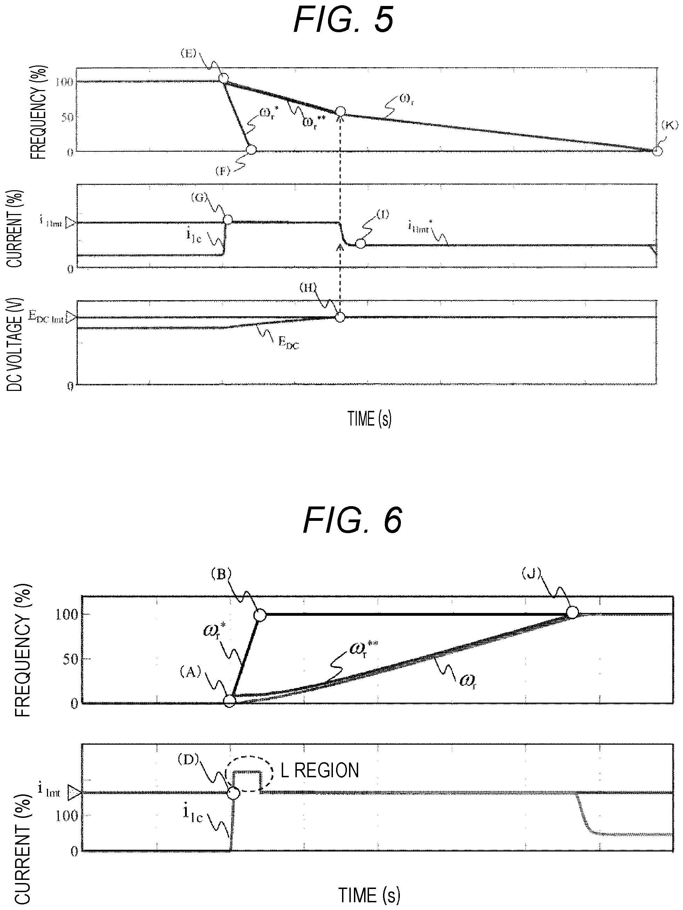

FIG. 3 illustrates a configuration of the frequency command correction calculation unit 6 in this embodiment. In FIG. 3, 6a1 indicates a constant $E_{DClmt}$ which is a predetermined voltage value. 6a2 indicates a subtraction unit and receives the constant $E_{DClmt}$ of 6a1 and the DC voltage $E_{DC}$. 6a3 indicates a current command limit calculation unit, and outputs $\Delta i_{1lmt}{}^*$ of Expression (3) according to a proportional integral control.
[Math. 3]

$$\Delta i1_{lmt}{}^* = Kpv + \frac{Kiv}{s}(E_{DC\,lmt} - E_{DC}) \quad \cdots (3)$$

Herein, Kpv is a proportional gain, and Kiv is an integral gain.

The upper limit of the integration is limited to "0". In addition, 6a4 indicates a constant of "0". A switch changeover unit 6a5 outputs "0" of 6a4 when the induction motor 1 accelerates, and outputs $\Delta i_{1lmt}{}^*$ of 6a3 when being decelerated.

An output current calculation unit 6a7 is provided to calculate the output current $i_{1c}$ according to Expression (4) from the current detection values $i_{dc}$ and $i_{qc}$ of $d_c$ axis and $q_c$ axis.
[Math. 4]

$$i_{1c} = \sqrt{i_{dc}{}^2 + i_{qc}{}^2} \quad \cdots (4)$$

6a8 indicates an addition unit which receives the constant $i_{1lmt}$ of 6a6 and the output of the switch changeover unit 6a5 and outputs a current limit value $i_{1lmt}{}^*$ which is the addition value.

The current limit value $i_{1lmt}{}^*$ varies according to Expression (5) in the acceleration (power running) operation.
[Math. 5]

$$i1_{lmt}{}^* = i1_{lmt} \quad \cdots (5)$$

In the deceleration (regeneration) operation, the output follows Expression (6).
[Math. 6]

$$i1_{lmt}{}^* = i1_{lmt} + \Delta i1_{lmt}{}^* \quad \cdots (6)$$

6a9 indicates a subtraction unit, and receives the current limit value $i_{1lmt}{}^*$ and the output current $i_{1c}$. 6a10 indicates a frequency command limit calculation unit, and outputs a frequency correction amount $\Delta\omega_r{}^*$ of Expression (7) according to the proportional integral control.
[Math. 7]

$$\Delta\omega_r{}^* = Kpf + \frac{Kif}{s}(i_{1\,lmt}{}^* - i_{1c}) \quad \cdots (7)$$

Herein, Kpf is a proportional gain, Kfi is an integral gain, and the upper limit of the integral unit is limited to "0".

6a11 indicates an addition unit, and outputs the new frequency command $\omega_r{}^{**}$ of Expression (8).

[Math. 8]

$$\omega_r^{**} = \omega_r^* + \Delta\omega_r^* \qquad \cdots (8)$$

In other words, the frequency command correction calculation unit 6 corrects a predetermined current value $i_{1lmt}$ such that the DC voltage $E_{DC}$ approaches the predetermined voltage value $E_{DClmt}$, and controls an output frequency $\omega_r^{**}$ such that the output current $i_{1c}$ approaches the corrected current value $i_{1lmt}^*$.

FIG. 4 illustrates the frequency and current characteristics according to this embodiment. (the condition used in FIG. 2 is set). Comparing the acceleration (power running) characteristics illustrated in FIGS. 2 and 4, the effects are apparent. Since FIG. 4 illustrates the acceleration characteristics, the switch changeover unit 6a5 in FIG. 3 outputs "0", and the output current $i_{1c}$ is limited at the predetermined current value $i_{1lmt}$. In other words, the output current $i_{1c}$ illustrated in the lower drawing of FIG. 4 is limited to the predetermined current value $i_{1lmt}$ from Point (D). In other words, the output current $i_{1c}$ is controlled to approach the predetermined current value $i_{1lmt}$. In addition, the actual frequency $\omega_r$ of the induction motor 1 accelerates to follow the new frequency command $\omega_r^{**}$, and a stable V/f control can be realized.

In the DC power source 2a of FIG. 1, the DC voltage $E_{DC}$ is supplied from a commercial three-phase AC power source by a diode rectifying operation in the power converter 2. If the induction motor 1 accelerates, the DC voltage $E_{DC}$ is once lowered. However, power is continuously supplied from the three-phase AC power source. Therefore, the DC voltage $E_{DC}$ is not significantly lowered in the acceleration (power running) operation. Therefore, the output current is limited to the predetermined current value $i_{1lmt}$ in this embodiment.

However, the power is not possible to be returned to the three-phase AC power source in the deceleration (regeneration) operation. Therefore, "$\Delta i_{1lmt}^*$" of the switch changeover unit 6a5 in FIG. 3 is selected to set the limit of the output current $i_{1c}$ to the current value $i_{1lmt}^*$ which is corrected according to Expression (6).

Next, FIG. 5 illustrates the frequency and current characteristics when the induction motor 1 decelerates (regeneration) operation. In the upper drawing of FIG. 5, the frequency command $\omega_r^*$ of a ramp shape is applied from 100% to 0 from Point (E) to Point (F). The output current $i_{1c}$ illustrated in the middle of FIG. 5 is limited to the predetermined current value $i_{1lmt}$ at Point (G). In addition, the DC voltage $E_{DC}$ illustrated in the lower drawing of FIG. 5 is limited to the predetermined voltage value $E_{DClmt}$ from Point (H) so as to limit the output current $i_{1c}$ to the current value $i_{1lmt}^*$ which is corrected according to Expression (6). In other words, in a case where the DC voltage $E_{DC}$ is larger than the predetermined voltage value $E_{DClmt}$, the predetermined current value $i_{1lmt}$ is corrected, and the output current $i_{1c}$ is controlled to approach a predetermined current value $i_{1lmt}^*$.

In addition, the frequency correction amount $\Delta\omega_r^*$ according to Expression (7) is calculated in the frequency command limit calculation unit 6a10 of FIG. 3. However, as illustrated in FIG. 6, the calculation of Expression (7) may start from a time point (D) when the output current $i_{1c}$ becomes larger than the corrected current value $i_{1lmt}^*$. In this case, overshoot is generated as illustrated in region L of the same drawing.

In this way, with this embodiment, it is possible to realize a stable operation such that the DC voltage $E_{DC}$ of the power converter 2 and the output current $i_{1c}$ do not fall into overvoltage and overcurrent regardless of the acceleration operation and the deceleration operation.

Further, the predetermined voltage value $E_{DClmt}$ and the predetermined current value $i_{1lmt}$ are automatically set using a circuit constant, a rated frequency, a rated voltage, and a rated current of the motor which are set in an inner memory of a microcomputer mounted in the power conversion device including the power converter 2. In addition, the predetermined voltage value $E_{DClmt}$ and the predetermined current value $i_{1lmt}$ may be set using a maximum voltage and a maximum current of a switching semiconductor element of the power converter 2.

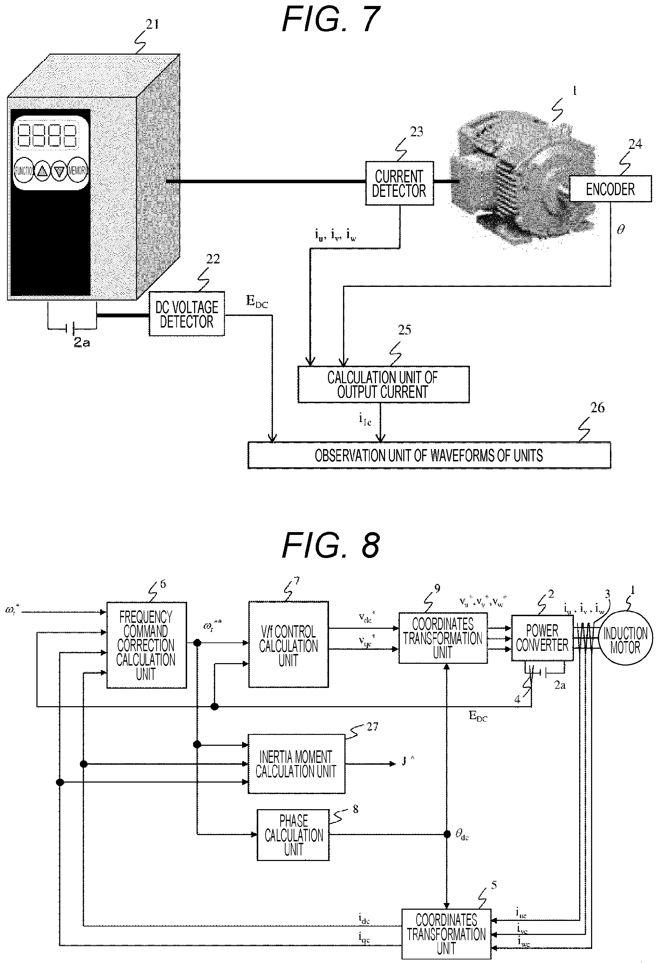

Herein, the description will be given using FIG. 7 about a correction method in a case where this embodiment is employed. As illustrated in FIG. 7, a DC voltage detector 22 and the current detector 23 are attached to the power conversion device 21 which drives the induction motor 1, and an encoder 24 is attached to a shaft of the induction motor 1.

In the calculation unit 25 of the output current, the three-phase current values ($i_u$, $i_v$, and $i_w$) which are the outputs of the current detector 23 and a position $\theta$ which is the output of the encoder are input, and the output current $i_{1c}$ is calculated. An observation unit 26 of the waveform of each unit observes the waveforms of the DC voltage $E_{DC}$ and the output current $i_{1c}$. For example, in a case where the induction motor 1 is in the deceleration operation, it can be seen clearly from the characteristics at Point G (limitation at the predetermined current value), Point H (limitation at the predetermined voltage value), and Point I (the corrected current value) illustrated in FIG. 5.

In addition, in a case where the encoder is not attached, the maximum value of the three-phase current values ($i_u$, $i_v$, and $i_w$) may be set to $i_{1c}$.

As described above, this embodiment is possible to provide the power conversion device and the control method thereof which can realize the acceleration/deceleration operation such that the power converter does not get into overcurrent and overvoltage by automatically adjusting the frequency command even in a case where the inertia moment value of the machine attached to the motor is large.

Second Embodiment

FIG. 8 is a diagram illustrating a configuration of the power conversion device in this embodiment. In the first embodiment, the induction motor 1 is subjected to the V/f control. However, the description in this embodiment will be given about an automatic tuning in which the inertia moment value of the machine attached to the induction motor 1 is measured as a base of the control of FIG. 1.

In FIG. 8, the same function as that of FIG. 1 is attached with the same symbol, and the description is omitted. In FIG. 8, a difference from FIG. 1 is that an inertia moment calculation unit 27 is provided.

The inertia moment calculation unit 27 receives the new frequency command $\omega_r^{**}$ which is the output of the frequency command correction calculation unit 6 and the current detection values $i_{dc}$ and $i_{qc}$ of $d_c$ axis and $q_c$ axis. An average torque $\tau_{m\_}$Power-Running of a section ((A) to (J) in FIG. 4) of the acceleration (power running) operation and an average torque $\tau_{m\_}$Regeneration of a section ((E) from (H) in FIG. 5) of the deceleration (regeneration) operation are calculated by Expression (9) in the inertia moment calculation unit 27. For example, an estimation value $J^{\wedge}$ of an inertia moment J is calculated by Expression (10) using time $\Delta t$ and speed $\Delta\omega$ in FIG. 4.

[Math. 9]

$$\left[\begin{array}{l} \tau_{m\_}\text{Power-Running} = \dfrac{3}{2}P_m\dfrac{M^2}{L_2}i_{dc}i_{qc} \\[4mm] \tau_{m\_}\text{Regeneration} = \dfrac{3}{2}P_m\dfrac{M^2}{L_2}i_{dc}i_{qc} \end{array}\right] \quad \cdots (9)$$

[Math. 10]

$$J^{\wedge} = \frac{\tau_{m\_}\text{Power-Running} + \tau_{m\_}\text{Regeneration}}{2}\frac{\Delta t}{\Delta\omega} \quad \cdots (10)$$

Further, the estimation value $J^{\wedge}$ may be used in gain calculation of a speed control which is employed in a third embodiment.

In addition, the control of FIG. 1 may be performed by the automatic tuning in which the measurement of the circuit constant of the motor is performed.

Third Embodiment

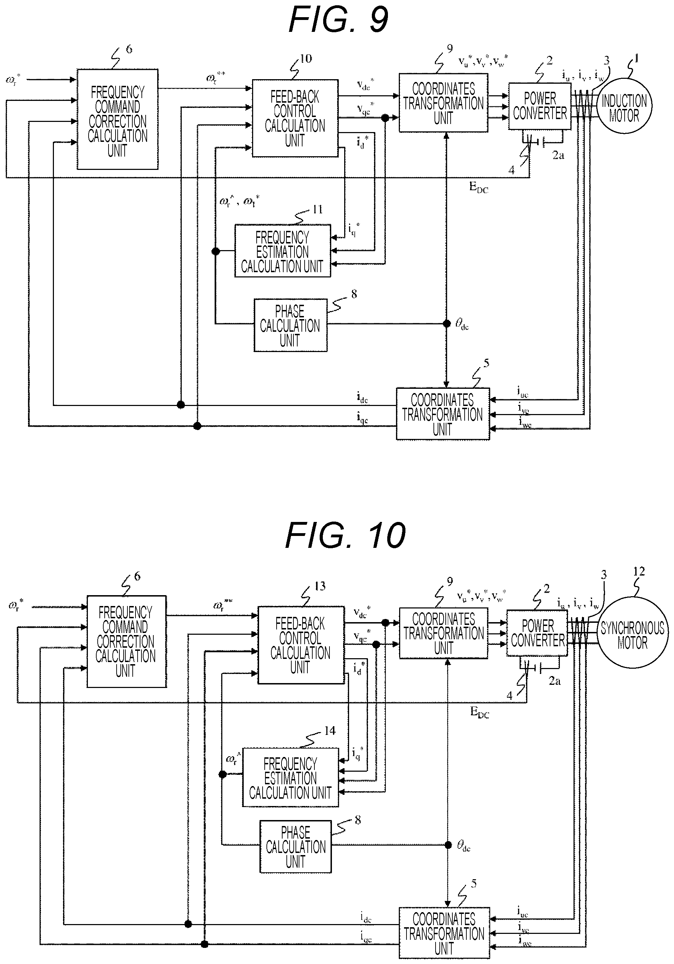

FIG. 9 is a diagram illustrating a configuration of the power conversion device in this embodiment. In the first embodiment, the induction motor 1 is subjected to the V/f control. However, in this embodiment, the speed control, a current control, and a vector control are calculated without using an encoder (speed sensor).

In FIG. 9, the same function as that of FIG. 1 is attached with the same symbol, and the description is omitted. In FIG. 9, a difference from FIG. 1 is that a feed-back control calculation unit 10 and a frequency estimation calculation unit 11 are included.

The feed-back control calculation unit 10 receives the new frequency command $\omega_r^{**}$ which is the output of the frequency command correction calculation unit 6, the current detection values $i_{dc}$ and $i_{qc}$ of dc axis and qc axis, a frequency estimation value $\omega_r^{\wedge}$, and an output frequency $\omega_1^*$. In the feed-back control calculation unit 10, the feed-back control of the speed control, the current control, and the vector control is calculated.

A current command value $i_d^*$ of d axis is a predetermined value, and causes a secondary magnetic flux $\varphi_{2d}$ of d axis in the induction motor 1.

The speed control calculates a current command value $i_q^*$ of q axis according to Expression (11) by the proportional integral control such that the frequency estimation value $\omega_r^{\wedge}$ follows the new frequency command $\omega_r^{**}$.
[Math. 11]

$$i_q^* = \left( \omega_r^{**} - \omega_r^\wedge \right)\left( Ksp + \frac{Ksi}{s} \right) \quad \cdots (11)$$

Herein, Ksp is a proportional gain of the speed control, and Ksi is an integral gain of the speed control.

The vector control calculates voltage reference values $v_{dc}^*$ and $v_{qc}^*$ according to Expression (12) using the current command values $i_d^*$ and $i_q^*$ of d axis and q axis, circuit constants ($R_1$, $L_\sigma$, M, and $L_2$) of the induction motor 1, and a secondary magnetic flux command value $\varphi_{2d}^*$ and an output frequency $\omega.'$ of d axis.

[Math. 12]

$$\begin{bmatrix} Vdc^* = R^* id^* - \omega_1^* L_\sigma^* \dfrac{1}{1+Tacr\, s} iq^* \\[2em] Vqc^* = R^* iq^* + \omega_1^* L_\sigma^* \dfrac{1}{1+Tacr\, s} id^* + \omega_1^* \dfrac{M}{L_2} \phi_{2d}^* \end{bmatrix} \quad \cdots (12)$$

Herein, $T_{acr}$ is a constant when the current control delays, $R_1$ is a primary resistance value, $L_\sigma$ is a leaking inductance value, M is a mutual inductance value, and $L_2$ is a secondary inductance value.

The current control calculates voltage correction values $\Delta v_{dc}^*$ and $\Delta v_{qc}^*$ of d axis and q axis according to Expression (13) by the proportional integral control such that the current detection values $i_{dc}$ and $i_{qc}$ follow the current command values $i_d^*$ and $i_q^*$ of d axis and q axis.

[Math. 13]

$$\begin{bmatrix} \Delta Vdc^* = \left( Kpd + \dfrac{Kid}{s} \right)(id^* - idc) \\[2em] \Delta vqc^* = \left( Kpq + \dfrac{Kiq}{s} \right)(iq^* - iqc) \end{bmatrix} \quad \cdots (13)$$

Herein, $K_{pd}$ is a proportional gain of the current control of d axis, $K_{id}$ is an integral gain of the current control of d axis, $K_{pq}$ is the proportional gain of the current control of q axis, and $K_{iq}$ is an integral gain of the current control of q axis.

Further, voltage command values $v_{dc}^{**}$ and $v_{dc}^{**}$ of $d_c$ axis and $q_c$ axis are calculated according to Expression (14).

[Math. 14]

$$\begin{bmatrix} v_{dc}^{**} = v_{dc}^{**} + \Delta v_{dc} \\[1em] v_{qc}^{**} = v_{qc}^{**} + \Delta v_{qc} \end{bmatrix} \quad \cdots (14)$$

In the frequency estimation calculation unit 11, the frequency estimation value $\omega_r^\wedge$ and the output frequency $\omega_1^*$ of the induction motor 1 are calculated according to Expression (15).

[Math. 15]

$$\omega_r{}^\wedge = \frac{1}{1+T_{obs}S}\left\{\frac{V_{qc}{}^{**} - \omega_1{}^* L\sigma^* \frac{1}{1+T_{acr}\,s} i_d{}^* - (R_1{}^* + R_2{}'^*) i_{qc} + L\sigma^* s\ i_{qc}}{\frac{M^*}{L_2{}^*}\phi_{2d}{}^*}\right\} \qquad \cdots (15)$$

$$\omega_1{}^* = \omega_r{}^\wedge + \frac{1}{T_2{}^*}\frac{i_q{}^*}{i_d{}^*}$$

Herein, $R_2'^*$ is a primary conversion value of a secondary resistance, $T_{obs}$ is an observer time constant, and $T_2$ is a secondary time constant value.

In this embodiment, even if the speed control, the current control, and the vector control are calculated instead of the V/f control, it is possible to realize a stable operation that the DC voltage $E_{DC}$ and the output current $i_{1c}$ of the power converter 2 do not get into overvoltage and overcurrent.

Further, the frequency estimation value $\omega_r{}^\wedge$ is calculated in this embodiment. However, in a case where an encoder is provided in the induction motor 1, a frequency detection value $\omega_r$ may be detected. In such a case, the current value $i_q{}^*$ of q axis according to Expression (16) is calculated to calculate the output frequency $\omega_1{}^*$ according to Expression (17).

[Math. 16]

$$i_q{}^* = \left(\omega_r{}^{**} - \omega_r\right)\left(K_{sp}+\frac{K_{si}}{s}\right) \qquad \cdots (16)$$

[Math. 17]

$$\omega_1{}^* = \omega_r + \frac{1}{T_2{}^*}\frac{i_q{}^*}{i_d{}^*} \qquad \cdots (17)$$

The voltage reference values $v_{dq}{}^*$ and $v_{qc}{}^*$ may be calculated by Expression (12) using the output frequency $\omega_1{}^*$.

In this way, according to the invention, even in a method for calculating the speed control, the current control, and the vector control, it is possible to realize a stable operation that the DC voltage $E_{DC}$ and the output current $i_{1c}$ of the power converter 2 do not get into overvoltage and overcurrent regardless of the existence of an encoder (speed sensor).

In addition, the inertia moment calculation unit 27 illustrated in the second embodiment may be provided as a base of the control of this embodiment, or may be realized by the automatic tuning where the circuit constant of the motor is measured.

Fourth Embodiment

FIG. 10 is a diagram illustrating a configuration of the power converter in this embodiment. In the first embodiment, the induction motor 1 is subjected to the V/f control. However, this embodiment relates to a method for calculating the speed control, the current control, and the vector control of a synchronous motor.

In FIG. 10, the same function as that of FIG. 1 is attached with the same symbol, and the description is omitted. In FIG. 10, a difference from FIG. 1 is that a control target is a synchronous motor 12 of a permanent magnetic type, and a feed-back control calculation unit 13 and a frequency estimation calculation unit 14 are included.

The feed-back control calculation unit 13 receives the new frequency command $\omega_r{}^{**}$ which is the output of the frequency command correction calculation unit 6, the current detection values $i_{dc}$ and $i_{qc}$ of dc axis and qc axis, and a frequency estimation value $\omega_r{}^\wedge$. In the feed-back control calculation unit 13, the feed-back control of the speed control, the current control, and the vector control is calculated. The current command value $i_d{}^*$ of d axis is "0" or a negative value.

The speed control calculates a current command value $i_q{}^*$ of q axis according to Expression (9) such that the frequency estimation value $\omega_r{}^\wedge$ follows the new frequency command $\omega_r{}^{**}$.

The vector control calculates the voltage reference values $v_{dc}{}^*$ and $v_{qc}{}^*$ according to Expression (18) using the current command values $i_d^*$ and $i_q^*$ of d axis and q axis, the circuit constants (R, $L_d$, $L_q$, and $K_e$) and the frequency estimation value $\omega_r{}^\wedge$ of the synchronous motor 12.

[Math. 18]

$$\left[ \begin{array}{l} V_{dc}^* = R^* i_d^* - \omega_r{}^\wedge L_q^* \dfrac{1}{1+\text{Tacr s}} i_q^* \\[3mm] V_{qc}^* = R^* i_q^* + \omega_r{}^\wedge \left( L_d^* \dfrac{1}{1+\text{Tacr s}} i_d^* + K_e^* \right) \end{array} \right] \qquad \cdots (18)$$

Herein, R is a winding resistance value, $L_d$ is an inductance value of d axis, $L_q$ is an inductance value of q axis, and $K_e$ is an induction voltage coefficient.

The current control calculates the voltage correction values $\Delta v_{dc}^*$ and $\Delta v_{qc}^*$ of $d_c$ axis and $q_c$ axis according to Expression (19) such that the current detection values $i_{dc}$ and $i_{qc}$ follow the current command values $i_d^*$ and $i_q^*$ of d axis and q axis.

[Math. 19]

$$\left[ \begin{array}{l} \Delta V_{dc}^* = \left( K_{pd} + \dfrac{K_{id}}{s} \right)(i_d^* - i_{dc}) \\[3mm] \Delta V_{qc}^* = \left( K_{pq} + \dfrac{K_{iq}}{s} \right)(i_q^* - i_{qc}) \end{array} \right] \qquad \cdots (19)$$

Further, the voltage command values $v_{dc}^{**}$ and $v_{dc}^{**}$ are calculated according to Expression (20).

[Math. 20]

$$\left[ \begin{array}{l} v_{dc}^{**} = v_{dc}^{**} + \Delta v_{dc} \\[3mm] v_{qc}^{**} = v_{qc}^{**} + \Delta v_{qc} \end{array} \right] \qquad \cdots (20)$$

In the frequency estimation calculation unit 14, the frequency estimation value $\omega_r{}^\wedge$ of the synchronous motor 12 is calculated according to Expression (21).

[Math. 21]

$$\Delta\theta_c = \tan^{-1}\left( \dfrac{V_{dc}^{**} - R^* i_{dc} + \omega_r{}^\wedge L_q^* i_{qc}}{V_{qc}^{**} - R^* i_{qc} - \omega_r{}^\wedge L_q^* i_{dc}} \right) \right\} \qquad \cdots (21)$$

$$\omega_r{}^\wedge = Kp_{pll} + \dfrac{Ki_{pll}}{s}(0 - \Delta\theta_c)$$

Herein, $\Delta\theta_c$ is an estimation value of a phase error between a control axis ($d_c$-$q_c$ axis) and a magnetic axis (d-q axis), $Kp_{p11}$ is a proportional gain of speed estimation, and $Ki_{p11}$ is an integral gain of speed estimation.

As described in this embodiment, even if the synchronous motor is applied instead of the induction motor, and the speed control, the current control, and the vector control are calculated, it is possible to realize a stable operation that the DC voltage $E_{DC}$ and the output current $i_{1c}$ of the power converter 2 do not get into overvoltage and overcurrent.

Further, the frequency estimation value $\omega_r{}^\wedge$ is calculated in this embodiment. However, in a case where an encoder is provided in the synchronous motor 12, a frequency detection value $\omega_r$ may be detected. In such a case, the current value $i_q^*$ of q axis according to Expression (22), and the voltage reference values $v_{dc}^*$ and $v_{qc}^*$ according to Expression (23) are calculated.

[Math. 22]

$$i_q^* = \left( \omega_r^{**} - \omega_r \right)\left( K_{sp} + \frac{K_{si}}{s} \right) \quad \cdots (22)$$

[Math. 23]

$$\begin{bmatrix} Vdc^* = R^* id^* - \omega_r L_q^* \dfrac{1}{1 + Tacr\ s} i_q^* \\[2ex] Vqc^* = R^* i_q^* + \omega_r \left( L_d^* \dfrac{1}{1 + Tacr\ s} id^* + K_e^* \right) \end{bmatrix} \quad \cdots (23)$$

In addition, the synchronous motor of this embodiment is a permanent magnet type in which a permanent magnetic is embedded, but may be a synchronous reluctance motor which does not use a permanent magnetic.

Further, the second embodiment may be applied as a base of the control of this embodiment.

Fifth Embodiment

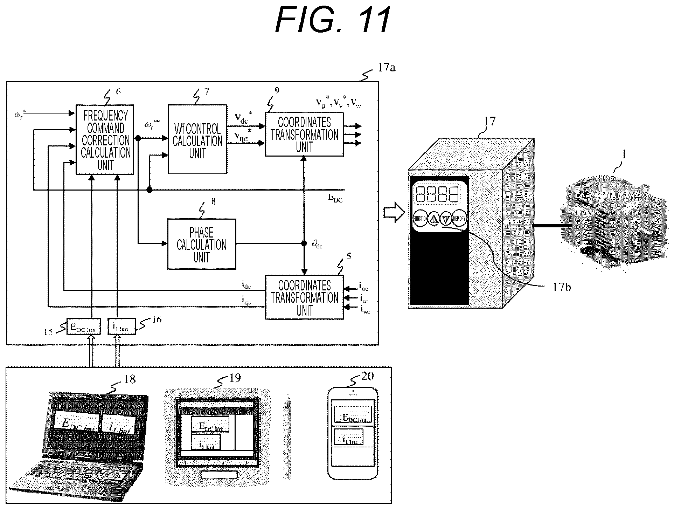

FIG. 11 is a diagram illustrating a configuration of the power converter in this embodiment. This embodiment is an example which is applied to an induction motor drive system.

In FIG. 11, the components 5 to 9 are the same as those of FIG. 1. The induction motor 1 of the component of FIG. 1 is driven by the power conversion device 17. In the power conversion device 17, the components 5 to 9 of FIG. 1 are mounted as software components 17a, and the components 2, 2a, 3, and 4 of FIG. 1 are mounted hardware components. A predetermined voltage value 15 and a predetermined current value 16 in the software component 17a may be set by a digital operator 17b of the power conversion device 17 and a host device such as a personal computer 18, a tablet 19, and a smart phone 20 which are external machines of the power conversion device 17.

If this embodiment is applied to the induction motor drive system, it is possible to realize a stable operation while preventing overcurrent and overvoltage even if the inertia moment value of the machine is large.

In addition, the predetermined voltage value 15 and the predetermined current value 16 may be set on a programmable logic controller (PLC) which is a host device and a local area network (LAN) connected to a computer.

Further, this embodiment has been described using the first embodiment, but may be applied to the second to fourth embodiments.

In the third and fourth embodiments, the voltage correction values $\Delta v_{dc}^*$ and $\Delta v_{qc}^*$ are created from the current command values $i_d^*$ and $i_q^*$ and the current detection values $i_{dc}$ and $i_{qc}$, and the voltage correction values and the voltage reference value of the vector control are added. However, there may be used a vector control method in which medium current command values $i_d^{**}$ and $i_q^{**}$ in Expression (24) for calculating the vector control are created as the current command values $i_d^*$ and $i_q^*$ from the current detection values $i_{dc}$ and $i_{qc}$, and the voltage command values $v_{dc}^{**}$ and $v_{qc}^{**}$ of $d_c$ axis and $q_c$ axis are calculated according to Expression (25) using the output frequency $\omega_1^*$ and the circuit constant of the induction motor 1 and Expression (26) using the frequency estimation value $w_r^{\wedge}$ and the circuit constant of the synchronous motor 12.

[Math. 24]

$$\begin{bmatrix} id^{**} = \left( K_{pd} + \dfrac{K_{id}}{s} \right)\left( id^* - idc \right) \\[2ex] i_q^{**} = \left( K_{pq} + \dfrac{K_{iq}}{s} \right)\left( i_q^* - i_{qc} \right) \end{bmatrix} \quad \cdots (24)$$

[Math. 25]

$$\begin{bmatrix} v_{dc}^{**} = R_1^* \, i_d^{**} - \omega_1^* L_\sigma^* \cfrac{1}{1 + L_\sigma^* / R_1^* \, s} i_q^{**} \\[3mm] v_{qc}^{**} = R_1^* \, i_q^{**} + \omega_1^* \left( L_\sigma^* \cfrac{1}{1 + L_\sigma^* / R_1^* \, s} i_d^{**} + \cfrac{M^*}{L_2^*} \phi_{2d}^* \right) \end{bmatrix} \qquad \cdots (25)$$

[Math. 26]

$$\begin{bmatrix} v_{dc}^{**} = R^* \, i_d^{**} - \hat{\omega}_r L_q^* \cfrac{1}{1 + L_q^* / R^* \, s} i_q^{**} \\[3mm] v_{qc}^{**} = R^* \, i_q^{**} + \hat{\omega}_r \left( L_q^* \cfrac{1}{1 + L_d^* / R^* \, s} i_d^{**} + Ke^* \right) \end{bmatrix} \qquad \cdots (26)$$

In addition, there may be applied a vector control method in which the voltage command values $v_{dc}^{**}$ and $v_{qc}^{**}$ of $d_c$ axis and $q_c$ axis are calculated according to Expression (27) using a current command $i_d^*$ of d axis, the current detection value $i_{qc}$ of $q_c$ axis, the new frequency command $\omega_r^{**}$ and the circuit constant of the synchronous motor 12, and Expression (28) using the circuit constant of the synchronous motor 12.
[Math. 27]

$$\begin{bmatrix} v_{dc}^{**} = R_1^* \, i_d^* - ( \omega_r^{**} + \cfrac{i_q^*}{T_2^* \, i_d^*} ) L_\sigma^* \cfrac{1}{1 + T_d \, s} i_{qc} \\[3mm] v_{qc}^* = R_1^* \, i_q^* + ( \omega_r^{**} + \cfrac{i_q^*}{T_2^* \, i_d^*} ) \left( L_\sigma^* i_d^* + \cfrac{M^*}{L_2^*} \phi_{2d}^* \right) \end{bmatrix} \qquad \cdots (27)$$

[Math. 28]

$$\begin{bmatrix} v_{dc}^{**} = R_1^* \, i_d^* - \omega_r^{**} L_q^* \cfrac{1}{1 + T_d \, s} i_{qc} \\[3mm] v_{qc}^* = R_1^* \, i_q^* + \omega_r^{**} \left( L_d^* i_d^* + K_e^* \right) \end{bmatrix} \qquad \cdots (28)$$

Further, in the first to fourth embodiments, a Si (silicon) semiconductor element or a wide-band gap semiconductor element such as a SiC (silicon carbide) and a GaN (gallium nitride) may be employed as a switching element of the power converter 2.

Reference Signs List

1 induction motor
2 power converter
2a DC power source
3 current detector

4 DC voltage detector

5 coordinates transformation unit

6 frequency command correction calculation unit

7 V/f control calculation unit

8 phase calculation unit

9 coordinates transformation unit

10, 13 feed-back control calculation unit

11, 14 frequency estimation calculation unit

15 predetermined voltage value

16 predetermined current value

17 power conversion device

17a software of power converter

17b digital operator of power converter

18 personal computer

19 tablet

20 smart phone

$\omega_r^*$ frequency command

$\omega_r^{**}$ new frequency command

$i_d^*$ current command value of d axis

$i_q^*$ current command value of q axis

$i_{dc}$ current detection value of d axis

$i_{qc}$ current detection value of q axis

$\omega_r$ actual frequency of motor

$\omega_r^\wedge$ frequency estimation value of motor

**Claims**

1. A power conversion device which controls a DC voltage ($E_{DC}$), an output frequency, and an output current of a power converter (2) which drives a motor (1), the power conversion device comprising a frequency command correction calculation unit (6) which automatically adjusts a frequency command $\omega_{r*}$), **characterized in that** the frequency command $\omega_r^*$) is automatically adjusted such that the power converter (2) does not get into overvoltage and overcurrent in an acceleration/deceleration operation of the motor (1), wherein the frequency command correction calculation unit (6) corrects a predetermined current value ($i_{1lim}$) such that the DC voltage approaches a predetermined voltage value, and controls the output frequency such that the output current approaches the corrected current value ($i_{1lim}^*$) .

2. The power conversion device according to claim 1,

   wherein, in a power running mode where a frequency of the motor (1) and a polarity of torque are same, the output frequency is controlled such that the output current approaches the predetermined current value, or wherein, in a case where the output current becomes larger than the predetermined current value, the output frequency is controlled.

3. The power conversion device according to claim 1,

   wherein, in a case where the DC voltage becomes larger than the predetermined voltage value in a regeneration mode where a frequency of the motor (1) and a polarity of torque are different, the predetermined current value is corrected and the output frequency is controlled such that the output current approaches the corrected current value, or wherein, in a case where the output current becomes larger than the predetermined current value, the output frequency is controlled.

4. The power conversion device according to any one of claims 1 to 3,

   wherein the motor (1) is an induction motor, and wherein an automatic tuning, a V/f control, a speed-senseless vector control, or a speed-sensor vector control are performed in an actual operation to measure a circuit constant and an inertia moment value of the motor (1).

**5.** The power conversion device according to any one of claims 1 to 3,

    wherein the motor (1) is a synchronous motor, and
    wherein an automatic tuning, a position-senseless vector control, or a position-sensor vector control are performed in an actual operation to measure a circuit constant and an inertia moment value of the motor (1).

**6.** The power conversion device according to any one of claims 1 to 3, wherein the predetermined voltage value and the predetermined current value are automatically set using a circuit constant, a rated frequency, a rated voltage, and a rated current of the motor (1) which are set in an inner memory of a microcomputer mounted in the power conversion device which includes the power converter (2).

**7.** The power conversion device according to any one of claims 1 to 3, wherein the predetermined voltage value and the predetermined current value are set using a maximum voltage and a maximum current of a switching semiconductor element of the power converter (2).

**8.** The power conversion device according to any one of claims 1 to 3, wherein the predetermined voltage value and the predetermined current value are set by an outside of the power conversion device.

**9.** The power conversion device according to claim 8, wherein the outside of the power conversion device is a personal computer (18), a tablet (19), or a smart phone (20) which is an external device.

**10.** The power conversion device according to claim 8, wherein the outside of the power conversion device is a programmable logic controller which is a host device, a local area network which is connected to a computer, or a field bus of the power conversion device.

**11.** A control method for a power conversion device which controls a DC voltage ($E_{DC}$), an output frequency, and an output current of a power converter (2) which drives a motor (1), **characterized by** automatically controlling a frequency command ($\omega_r^*$) to prevent the power converter (2) from getting into overvoltage and overcurrent in an acceleration/deceleration operation of the motor (1), wherein a predetermined current value is corrected such that the DC voltage approaches a predetermined voltage value, and the output frequency is controlled such that the output current approaches the corrected current value.

**12.** The control method for the power conversion device according to claim 11,

    wherein, in a power running mode where a frequency of the motor (1) and a polarity of torque are same, the output frequency is controlled such that the output current approaches the predetermined current value, or
    wherein, in a case where the output current becomes larger than the predetermined current value, the output frequency is controlled.

**13.** The control method for the power conversion device according to claim 11,

    wherein, in a case where the DC voltage becomes larger than the predetermined voltage value in a regeneration mode where a frequency of the motor (1) and a polarity of torque are different, the predetermined current value is corrected and the output frequency is controlled such that the output current approaches the corrected current value, or
    wherein, in a case where the output current becomes larger than the predetermined current value, the output frequency is controlled.

**Patentansprüche**

**1.** Leistungswandlervorrichtung, die eine Gleichspannung ($E_{DC}$), eine Ausgangsfrequenz und einen Ausgangsstrom eines Leistungswandlers (2), der einen Motor (1) antreibt, steuert, wobei die Leistungswandlervorrichtung eine Frequenzbefehlskorrektur-Berechnungseinheit (6) umfasst, die automatisch einen Frequenzbefehl ($\omega_r$) anpasst, **dadurch gekennzeichnet, dass** der Frequenzbefehl ($\omega_r$) automatisch angepasst wird, sodass der Leistungswandler (2) in einem Beschleunigungs-/Verzögerungsbetrieb des Motors (1) nicht in einen Überspannungs- und Überstrom-Zustand übergeht, wobei die Frequenzbefehlskorrektur-Berechnungseinheit (6) einen vorbestimmten Stromwert ($i_{1lim}$) derart korrigiert,

dass sich die Gleichspannung einem vorbestimmten Spannungswert nähert, und die Ausgangsfrequenz derart steuert, dass sich der Ausgangsstrom dem korrigierten Stromwert ($i_{1lim}$) nähert.

2. Leistungswandlervorrichtung nach Anspruch 1,

wobei in einem Leistungslaufmodus, in dem eine Frequenz des Motors (1) und eine Polarität des Drehmoments gleich sind, die Ausgangsfrequenz derart gesteuert ist, dass sich der Ausgangsstrom dem vorbestimmten Stromwert nähert, oder
wobei in einem Fall, in dem der Ausgangsstrom größer wird als der vorbestimmte Stromwert, die Ausgangsfrequenz gesteuert wird.

3. Leistungswandlervorrichtung nach Anspruch 1,

wobei in einem Fall, in dem die Gleichspannung größer wird als der vorbestimmte Spannungswert in einem Regenerationsmodus, in dem eine Frequenz des Motors (1) und eine Polarität des Drehmoments unterschiedlich sind, der vorbestimmte Stromwert korrigiert wird und die Ausgangsfrequenz derart gesteuert wird, dass sich der Ausgangsstrom dem korrigierten Stromwert nähert, oder
wobei in einem Fall, in dem der Ausgangsstrom größer wird als der vorbestimmte Stromwert, die Ausgangsfrequenz gesteuert wird.

4. Leistungswandlervorrichtung nach einem der Ansprüche 1 bis 3,

wobei der Motor (1) ein Induktionsmotor ist und
wobei eine automatische Abstimmung, eine U/f-Steuerung, eine geschwindigkeitssensorlose Vektorsteuerung oder eine Geschwindigkeitssensor-Vektorsteuerung in einem tatsächlichen Betrieb durchgeführt werden, um eine Schaltungskonstante und einen Trägheitsmomentwert des Motors (1) zu messen.

5. Leistungswandlervorrichtung nach einem der Ansprüche 1 bis 3,

wobei der Motor (1) ein Synchronmotor ist und
wobei eine automatische Abstimmung, eine positionssensorlose Vektorsteuerung oder eine Positionssensor-Vektorsteuerung in einem tatsächlichen Betrieb durchgeführt werden, um eine Schaltungskonstante und einen Trägheitsmomentwert des Motors (1) zu messen.

6. Leistungswandlervorrichtung nach einem der Ansprüche 1 bis 3, wobei der vorbestimmte Spannungswert und der vorbestimmte Stromwert automatisch eingestellt werden, unter Verwendung einer Schaltungskonstante, einer Nennfrequenz, einer Nennspannung und eines Nennstroms des Motors (1), die in einem inneren Speicher eines Mikrorechners eingestellt sind, der in der den Leistungswandler (2) umfassenden Leistungswandlervorrichtung befestigt ist.

7. Leistungswandlervorrichtung nach einem der Ansprüche 1 bis 3, wobei der vorbestimmte Spannungswert und der vorbestimmte Stromwert unter Verwendung einer Maximalspannung und eines Maximalstroms eines Halbleiterschaltelements des Leistungswandlers (2) eingestellt werden.

8. Leistungswandlervorrichtung nach einem der Ansprüche 1 bis 3, wobei der vorbestimmte Spannungswert und der vorbestimmte Stromwert von außerhalb der Leistungswandlervorrichtung eingestellt werden.

9. Leistungswandlervorrichtung nach Anspruch 8, wobei von außerhalb der Leistungswandlervorrichtung ein Personal Computer (18), ein Tablet (19) oder ein Smartphone (20) ist, der/das eine externe Vorrichtung ist.

10. Leistungswandlervorrichtung nach Anspruch 8, wobei das Externe der Leistungswandlervorrichtung eine programmierbare Logiksteuerung ist, die eine Host-Vorrichtung, ein mit einem Computer verbundenes lokales Netzwerk oder ein Feldbus der Leistungswandlervorrichtung ist.

11. Steuerungsverfahren für eine Leistungswandlervorrichtung, die eine Gleichspannung ($E_{DC}$), eine Ausgangsfrequenz und einen Ausgangsstrom eines Leistungswandlers (2) steuert, der einen Motor (1) antreibt,

**gekennzeichnet durch** ein automatisches Steuern eines Frequenzbefehls ($\omega_r$), um zu vermeiden, dass der Leistungswandler (2) in einem Beschleunigungs-/Verzögerungsbetrieb des Motors (1) in einen Überspannungs- und einen Überstromzustand übergeht,

wobei ein vorbestimmter Stromwert derart korrigiert wird, dass sich die Gleichspannung einem vorbestimmten Spannungswert nähert, und die Ausgangsfrequenz derart gesteuert wird, dass sich der Ausgangsstrom dem korrigierten Stromwert nähert.

**12.** Steuerungsverfahren für eine Leistungswandlervorrichtung nach Anspruch 11,

wobei in einem Leitungslaufmodus, in dem eine Frequenz des Motors (1) und eine Polarität des Drehmoments gleich sind, die Ausgangsfrequenz derart gesteuert wird, dass sich der Ausgangsstrom dem vorbestimmten Stromwert nähert, oder

wobei in einem Fall, in dem der Ausgangsstrom größer wird als der vorbestimmte Stromwert, die Ausgangsfrequenz gesteuert wird.

**13.** Steuerungsverfahren für eine Leistungswandlervorrichtung nach Anspruch 11,

wobei in einem Fall, in dem die Gleichspannung größer wird als der vorbestimmte Spannungswert in einem Regenerationsmodus, in dem eine Frequenz des Motors (1) und eine Polarität des Drehmoments unterschiedlich sind, der vorbestimmte Stromwert korrigiert wird und die Ausgangsfrequenz derart gesteuert wird, dass sich der Ausgangsstrom dem korrigierten Stromwert nähert, oder

wobei in einem Fall, in dem der Ausgangsstrom größer wird als der vorbestimmte Stromwert, die Ausgangsfrequenz gesteuert wird.

**Revendications**

**1.** Dispositif de conversion de puissance qui commande une tension continue ($E_{DC}$), une fréquence de sortie, et un courant de sortie d'un convertisseur de puissance (2) qui entraîne un moteur (1), le dispositif de conversion de puissance comprenant une unité de calcul de correction de commande de fréquence (6) qui ajuste automatiquement une commande de fréquence $\omega_r{}^*$) ;

**caractérisé en ce que** la commande de fréquence $\omega_r{}^*$) est automatiquement ajustée de sorte que le convertisseur de puissance (2) ne subit pas de surtension et de surintensité dans le cadre d'une opération d'accélération / de décélération du moteur (1) ;

dans lequel l'unité de calcul de correction de commande de fréquence (6) corrige une valeur de courant prédéterminée ($i_{1lim}$) de sorte que la tension continue se rapproche d'une valeur de tension prédéterminée, et commande la fréquence de sortie de sorte que le courant de sortie se rapproche de la valeur de courant corrigée ($i_{1lim}{}^*$).

**2.** Dispositif de conversion de puissance selon la revendication 1,

dans lequel, dans un mode de fonctionnement de puissance où une fréquence du moteur (1) et une polarité de couple sont les mêmes, la fréquence de sortie est commandée de sorte que le courant de sortie se rapproche de la valeur de courant prédéterminée ; ou

dans lequel, dans un cas où le courant de sortie devient supérieur à la valeur de courant prédéterminée, la fréquence de sortie est commandée.

**3.** Dispositif de conversion de puissance selon la revendication 1,

dans lequel, dans un cas où la tension continue devient supérieure à la valeur de tension prédéterminée dans un mode de régénération où une fréquence du moteur (1) et une polarité de couple sont différentes, la valeur de courant prédéterminée est corrigée et la fréquence de sortie est commandée, de sorte que le courant de sortie se rapproche de la valeur de courant corrigée ; ou

dans lequel, dans un cas où le courant de sortie devient supérieur à la valeur de courant prédéterminée, la fréquence de sortie est commandée.

**4.** Dispositif de conversion de puissance selon l'une quelconque des revendications 1 à 3,

dans lequel le moteur (1) est un moteur à induction ; et

dans lequel une syntonisation automatique, une commande V/f, une commande vectorielle sans détecteur de vitesse, ou une commande vectorielle avec détecteur de vitesse sont mises en œuvre dans le cadre d'une opération réelle pour mesurer une constante de circuit et une valeur de moment d'inertie du moteur (1).

5. Dispositif de conversion de puissance selon l'une quelconque des revendications 1 à 3,

dans lequel le moteur (1) est un moteur synchrone ; et
dans lequel une syntonisation automatique, une commande vectorielle sans détecteur de position ou une commande vectorielle avec détecteur de position sont mises en œuvre dans le cadre d'une opération réelle pour mesurer une constante de circuit et une valeur de moment d'inertie du moteur (1).

6. Dispositif de conversion de puissance selon l'une quelconque des revendications 1 à 3, dans lequel la valeur de tension prédéterminée et la valeur de courant prédéterminée sont automatiquement réglées en utilisant une constante de circuit, une fréquence nominale, une tension nominale et un courant nominal du moteur (1) qui sont réglés dans une mémoire interne d'un micro-ordinateur monté dans le dispositif de conversion de puissance qui inclut le convertisseur de puissance (2).

7. Dispositif de conversion de puissance selon l'une quelconque des revendications 1 à 3, dans lequel la valeur de tension prédéterminée et la valeur de courant prédéterminée sont réglées en utilisant une tension maximale et un courant maximal d'un élément à semi-conducteur de commutation du convertisseur de puissance (2).

8. Dispositif de conversion de puissance selon l'une quelconque des revendications 1 à 3, dans lequel la valeur de tension prédéterminée et la valeur de courant prédéterminée sont réglées par un élément extérieur du dispositif de conversion de puissance.

9. Dispositif de conversion de puissance selon la revendication 8, dans lequel l'élément extérieur du dispositif de conversion de puissance est un ordinateur personnel (18), une tablette (19) ou un téléphone intelligent (20) qui est un dispositif externe.

10. Dispositif de conversion de puissance selon la revendication 8, dans lequel l'élément extérieur du dispositif de conversion de puissance est un contrôleur logique programmable qui est un dispositif hôte, un réseau local qui est connecté à un ordinateur, ou un bus de terrain du dispositif de conversion de puissance.

11. Procédé de commande pour un dispositif de conversion de puissance qui commande une tension continue ($E_{DC}$), une fréquence de sortie, et un courant de sortie d'un convertisseur de puissance (2) qui entraîne un moteur (1),

**caractérisé par** l'étape consistant à commander automatiquement une commande de fréquence $\omega_r^*$) pour empêcher le convertisseur de puissance (2) de subir une surtension et une surintensité dans le cadre d'une opération d'accélération / de décélération du moteur (1) ;
dans lequel une valeur de courant prédéterminée est corrigée de sorte que la tension continue se rapproche d'une valeur de tension prédéterminée, et la fréquence de sortie est commandée de sorte que le courant de sortie se rapproche de la valeur de courant corrigée.

12. Procédé de commande pour le dispositif de conversion de puissance selon la revendication 11,

dans lequel, dans un mode de fonctionnement de puissance où une fréquence du moteur (1) et une polarité de couple sont les mêmes, la fréquence de sortie est commandée de sorte que le courant de sortie se rapproche de la valeur de courant prédéterminée, ou
dans lequel, dans un cas où le courant de sortie devient supérieur à la valeur de courant prédéterminée, la fréquence de sortie est commandée.

13. Procédé de commande pour le dispositif de conversion de puissance selon la revendication 11,

dans lequel, dans un cas où la tension continue devient supérieure à la valeur de tension prédéterminée dans un mode de régénération où une fréquence du moteur (1) et une polarité de couple sont différentes, la valeur de courant prédéterminée est corrigée et la fréquence de sortie est commandée, de sorte que le courant de sortie se rapproche de la valeur de courant corrigée, ou
dans lequel, dans un cas où le courant de sortie devient supérieur à la valeur de courant prédéterminée, la fréquence de sortie est commandée.

# FIG. 1

# FIG. 2

# FIG. 3

# FIG. 4

## FIG. 5

## FIG. 6

# FIG. 7

# FIG. 8

# EP 3 703 249 B1

## FIG. 9

## FIG. 10

21

# FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002034289 A

- JP 2012175742 A